Europäisches Patentamt

European Patent Office

Office européen des brevets

(19)

(11) Publication number: **0 017 682**
A2

## (12) EUROPEAN PATENT APPLICATION

(21) Application number: 79300675.0

(22) Date of filing: 23.04.79

(51) Int. Cl.³: **G 01 V 3/10, E 21 B 47/00**

(30) Priority: 17.04.79 CA 325773

(71) Applicant: **GEOPROBE LIMITED, 32 Progress Avenue, Scarborough Ontario (CA)**

(43) Date of publication of application: 29.10.80
Bulletin 80/22

(72) Inventor: **Williams, Michael R., 419 Sunset Drive, Oakville Ontario (CA)**

(84) Designated Contracting States: **DE FR GB**

(74) Representative: **Fisher, Bernard et al, Raworth, Moss & Cook 36 Sydenham Road, Croydon Surrey CR0 2EF (GB)**

(54) Method and system for geophysical induction surveying.

(57) The present invention relates to an inductive electromagnetic investigative method and is used for determining the presence of constituent mixtures of metallic compositions in a body The moethod comprises the steps of creating at least one electromagnetic field inductively coupling the body to be investigated with the field for exciting the body to produce current flow in any such mixtures which by virtue of their inherent non linear circuit characteristics, give rise to secondary electromagnetic field effects which are non linear with respect to the created field. Investigating any secondary electromagnetic field created by the excitation of the body for the presence of any such non linear secondary electromagnetic field effects, to determine if any such mixtures are present indivative of the nature of the body.

ACTORUM AG

- 1 -

## Geophysical Surveying Method

The present invention relates to an inductive electromagnetic investigative method especially useful in geophysical surveying for detecting sulphide ore bodies.

In the past, various geophysical methods have been used to detect the presence of ore bearing bodies beneath the surface of the earth. The most widely used of these methods creates a primary electromagnetic (E.M.) field to induce a secondary field in a conductor and measure the secondary field relative to the primary field to establish the presence and size of the conductor. These methods have not been able to distinguish commercial ore bodies from non desired conductors such as clay, saline water bodies etc.

According to the present invention it has been found that constituent mixtures of metallic compositions have inherent non linear circuit characteristics independent of current and the presence of these mixtures and associated ore bodies are therefore determined by exciting them with a created E.M. field and detecting secondary E.M. field effects which are non linear with respect to the created E.M. field.

The inductive electromagnetic investigative method of the present invention is used for determining the presence of constituent mixtures of metallic composition in a body and comprises the steps of creating at least one electromagnetic field, inductively coupling the body to be investigated with the at least one electromagnetic field for exciting the body to produce current flow in any such mixtures which, by virtue of their inherent non linear circuit characteristics, give rise to secondary electromagnetic field effects which are non linear with respect to the at least one created electromagnetic field, investigating any secondary electromagnetic field created by the excitation of the body by the at least one created electromagnetic field for the presence of any such non linear secondary electromagnetic field effects to determine if any such mixtures are present indicative of the nature of the body.

Although the method of the present invention is primarily directed to a geophysical surveying method it is also useful for detecting corrosion faults, or discontinuities in metallic articles. For example, this method is used to detect weld faults in pipelines which again have inherent non linear circuit characteristics.

In carrying out the method the created electromagnetic field or fields are selected to have a frequency in the audio range, e.g. from about 1 hertz to 10,000 hertz, the particular frequency being dependent on the circumstances encountered such as over burden and the like, and the intensity the field created being selected also according to the circumstances encountered such as the over burden depth of investigation etc., as well as the frequency of the created field. It is to be understood that in the selection of the frequency and intensity of the created E.M. field the object is simply to induce current flow in the mixture of metallic compositions in the body being investigated of sufficient magnitude that the resulting secondary field effects produced as a result of such current flow can be detected.

It will be understood that the non linear circuit characteristics of the constituent mixtures of metallic compositions will give rise to different non linear secondary field

- 3 -

effects, dependent upon the nature of the exciting field which induces the current flow in the mixture. For instance if the exciting flow is a pure sine wave the secondary field will contain particular non linear effects of interest in the form of harmonics of the exciting field.

In another example, if the exciting field was made up of two fields of different frequencies the secondary field will contain particular non linear effects of interest in the form of beat frequencies of the exciting fields.

The presence of such non linear effects will be indicative of the presence of such mixtures which will indicate for example, that the body is an ore containing body of interest. The non linear effects can themselves be analysed for e.g. phase characteristics to give information as to the nature of the ore.

Preferred embodiments of the invention are shown in the drawings wherein;

Figure 1 is a side elevation of the geophysical surveying apparatus, and a schematic of a sulphide ore body containing constituent mixtures of metallic compositions in a host rock,

Figure 2 is a partial enlargement of the sulphide ore body illustrating the inter-relationship of the metallic mixtures,

Figure 3 is a schematic representation a preferred method of the present invention wherein two electromagnetic fields are transmitted to excite a sulphide ore bearing body, and any non linear effects are observed by monitoring the beat frequencies,

Figure 4 is a schematic view of a further embodiment of the present investigative method wherein the non linear effects of the constituent mixtures of the metallic compositions are enhanced by stimulating the body with an interrupted D.C. Field, and

- 4 -

Figure 5 is a schematic view of the investigative method wherein non linear effects of constituent mixtures of metallic compositions are enhanced by stimulating the body with a second different E.M. field having a much lower frequency.

The present invention makes use of the fact that commercially viable sulphide ore bodies normally contain constituent mixtures of metallic compositions. These mixtures have inherent non linear circuit characteristics similar to those found in electrical circuits comprising resistors, inductors and diodes.

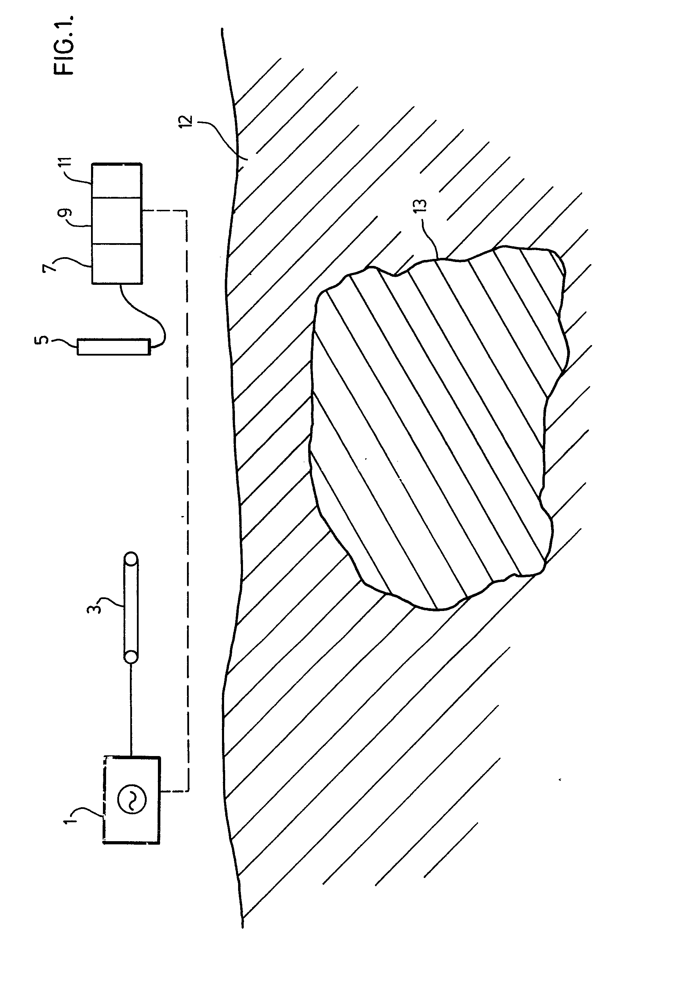

Figure 1 shows an apparatus for carrying out a method of geophysical surveying according to the present invention. The apparatus comprises a signal generator 1, a transmitting loop 3, a receiver coil 5, an amplifier 7, apparatus 15 used to detect the presence of a sulphide ore body 13, containing constituent mixtures of metallic compositions 15, embodied in the host rock 12. As shown in Figure 2 these constituent mixtures consist of inter mixed compositions, A, B and C.

The receiver coil shown in all of the figures can be replaced by other devices such as a fluxgate magnaometer and cryogenic devices which will effectively monitor the secondary field resulting from transmissions from loop 3.

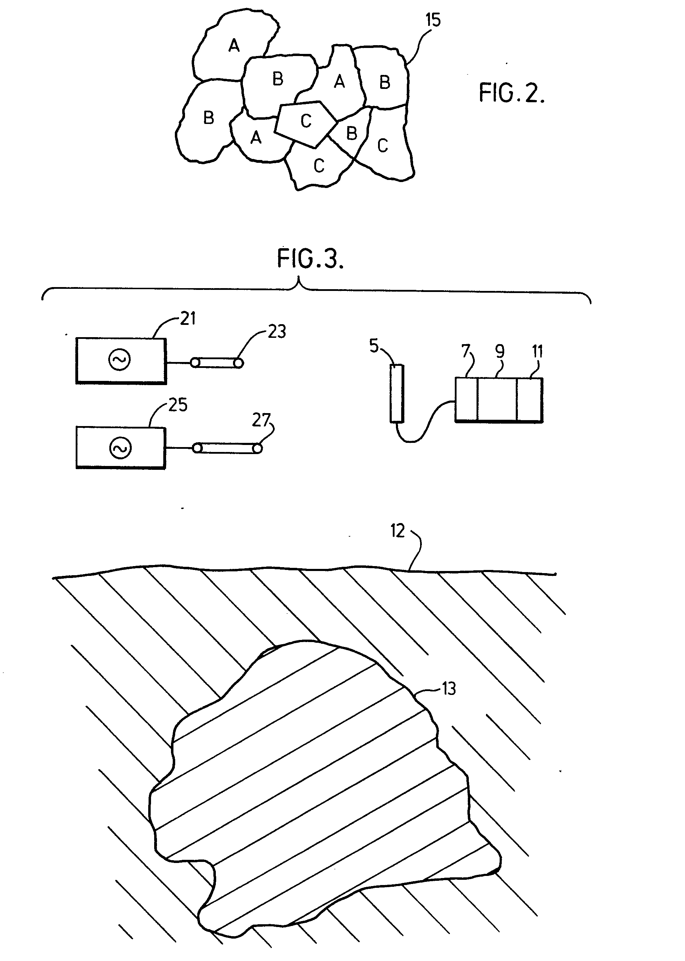

A preferred method is carried out which using the apparatus shown in Figure 3 which includes two signal generators 21 and 25, each of which has its own transmitting loop, 23 and 27 respectively. The receiver coil and associated components are the same as those described with respect to Figure 1.

Two electromagnetic fields are created by passing currents through loops 23 and 27 at two different frequencies to produce beat frequencies when constituent mixtures, 15 are encountered. For example, the frequency of the signal passed through loop 23 could be 1000 hertz and the frequency of the signal passed through loop 25 could be 750 hertz. Using this example the secondary electromagnetic field is investigated at 250 hertz and at 1750 hertz which are the beat frequencies of these signals. Responses at these frequencies indicate the presence of non-linear circuit characteristics of constituent mixtures of metallic compositions.

Examples of mixtures that exhibit these non linear characteristics include combinations of copper, nickle, molybdenum and lead. These as well as other combinations are found in commercially viable sulphide ore bodies. Therefore, the detection of beat frequencies indicates the presence of such ore bodies.

Returning to Figure 1 signal generator 1 produces an essentially pure sine wave transmitted through loop 3. According to this embodiment, the non linear circuit characteristics of mixtures 15 may be detected in the secondary electromagnetic field at harmonics of the field created by the pure sine wave. The pure sine wave is required to assure the harmonics detected are due to the secondary electromagnetic field and are not due to noise in the signal generator. When investigating the secondary E.M. field at harmonics of the essentially pure sine wave it has been found that the odd harmonics produce somewhat larger responses than the even harmonics and the response at the third harmonic is generally the highest.

As can be seen in Figure 1 the receiver coil 5 is positioned to be minimum coupled with the transmitting loop 3. This arrangement also assists in assuring that any harmonics detected are due to the secondary electromagnetic field and are not a result of noise in the created electromagnetic field. This minimum coupling is especially beneficial when using low current levels to produce the created electromagnetic field, i.e. current levels in the range of about one to forty amps. The harmonic response in the secondary field is always very low with respect to the primary field but it is still at a level which can be detected by modern instruments. The minimum coupling of the receiver coil with the created electromagnetic field helps in picking up the harmonic responses by cutting undesired distortions in the created field. Since it is difficult to create a totally pure sine wave, noise may be present which may bias the response in the receiver coil, and minimum coupling helps to eliminate such bias.

The pick up of noise does not present as a great problem in working with the method described with respect to Figure 3, however, minimum coupling may still be used.

When a signal having non linear circuit characteristics is encountered the orientation of the receiver coil can be adjusted to maximize the response. The response at the minimum coupling position assures an ore body is present and although the maximum response may contain some noise of the primary signal it also provides additional information for analysing the particular ore body.

The frequencies used in the created E.M. field will be in the audio range and preferably between 50 and 2500 hertz although they may be as low as about .1 hertz and as high as about 10,000 hertz. However, when over-burden or conductive host rock is encountered, usually lower frequencies are used.

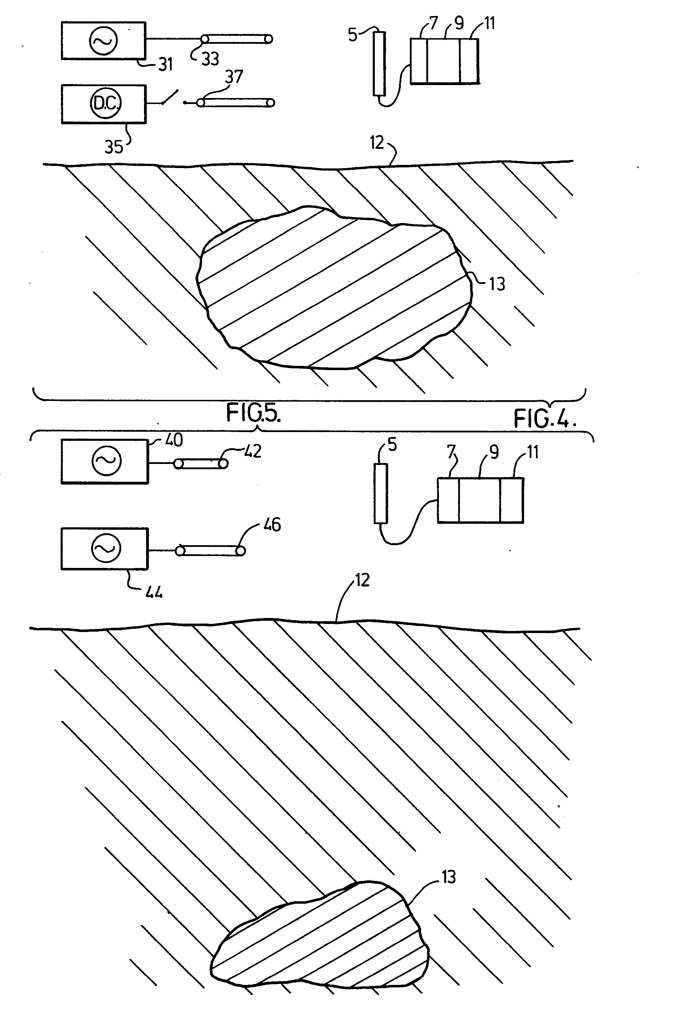

Figure 4 shows a further preferred method according to the present invention which is carried out through the use of signal generator 31, transmitter loop 33, D.C. power source 35, and transmitter loop 37. Again, the detecting means consisting of coil 5, amplifier 7, filter 9 and recorder or meter 11, are used to search for non linear secondary field effects produced by mixtures 15 in body, 13.

The method according to Figure 4 is similar with respect to that described in Figure 1 in that a substantially pure sine wave is used to create the electromagnetic field. However, according to this embodiment, D.C. power source 35, is turned on and off in one to five second intervals to create an interrupted or decaying D.C. electromagnetic field to which ore body 13 is subjected. The non linear circuit characteristics of the constituent mixtures in ore body 13 are enhanced by this interrupted or decayed D.C. electromagnetic field so that the harmonic response is increased and more readily detected.

In regards to Figure 5, it has been found that non linear circuit characteristics of the constituent mixtures of metallic compositions have been enhanced by using two electromagnetic fields. In this particular embodiment, a substantially pure sine wave would be produced in signal generator 40 and fed to transmitter loop 42. The frequency of this particular signal would be in the range of approximately 50 hertz to 10,000 hertz. The second signal generator 44 produces a signal having a frequency in the range of about 1 to 100 hertz and preferably about 25 hertz. This additional electromagnetic field stimulates the constituent mixtures of metallic compositions and increases the non linear effect in the secondary field. This method is particularly suited for detecting the presence of deeply buried sulphide ore bodies as shown in Figure 5. Without this stimulating field the harmonic response of the sulphide bearing ore bodies would be difficult to detect because of the depths involved, and would make it easier to detect without increasing the exciting field levels.

- 8 -

It should also be noted that an additional stimulating field can also be used to enhance responses in the secondary field when using two exciting fields and investigating at the beat frequencies.

There are a number of ways of using the transmitting and receiving loops according to the present invention. These include the use of a large fixed transmitting loop and a portable receiver which is moved relative to the transmitting loop or the use of a portable transmitting loop which is carried along with the receiver loop in a constant fixed relationship. According to the first example the fixed transmitter may be in the form of a large rectangle of approximately 2 kilometers by 2 kilometers and measurements may be taken by a moving receiver located within 3 kilometers of the fixed loop. According to the second example the receiver may be either separated from the transmitter or one may be on top of the other. The transmitting loop will be secured in a plane or helicopter and the receiving coil is either carried with the transmitting loop or in a separate vehicle such as a towed bird.

All of the embodiments described above, are based on the detection of non linear secondary field effects, and are particularly valuable in geophysical survey methods although they may be used for other applications such as detection of weld faults in rods and pipelines. A prime feature of the present invention resides in the fact that these non linear characteristics are always present in constituent mixtures of metallic compositions and only a minimal excitation is required to activate these characteristics to produce secondary field effects. More specifically the method utilises the discovery that constituent mixtures of metallic compositions which are present, for instance in sulphide ore bodies have non linear circuit characteristics, corresponding to circuits containing inductors, resistors and diodes, and therefore by inducing current flow in the mixtures, this current flow will give rise to non linear secondary field effects. Furthermore, it has also been found that the secondary field effects can be detected with relatively low intensity electromagnetic excitation fields which have relatively small coupling with some mixtures. It is believed that the excitation field may also in fact provide some additional biasing effect on the constituent mixtures of the non linear circuits constituted by the mixtures of metallic compositions to provide an internal energy release in such circuits resulting in the amplification of the secondary effects.

As will be appreciated from the discussion above, the method of the present invention does not require high current levels to detect the presence of constituent mixtures of metallic compositions, thereby making it practical for geophysical application. However as will also be appreciated, higher current levels may be used for the detection of deeply buried ore bodies to obtain better signal to noise ratio for reliable measurements.

Having reference once again to Figure 3, it should also be pointed out that in the production of beat frequencies it is not necessary to use 2 transmitting loops, i.e. created fields at two different frequencies may be provided using a single transmitting loop. Furthermore, according to all the embodiments described, once the secondary field effects have been determined to indicate the presence of constituent mixtures of metallic compositions the phase characteristics of the secondary field effects are analysed to determine the exact nature of the mixtures, i.e. to indicate what compositions are present in the mixtures. Therefore, the present invention not only distinguishes commercial ore bodies from non commercial conductive bodies beneath the earths surface but also indicates the exact nature of the detected commercial body.

Claims:

1.      An inductive E.M. investigative method for determining the presence of constituent mixtures of metallic compositions in a body comprising the steps of creating at least one E.M. field, inductively coupling the body to be investigated with said at least one E.M. field for exciting the body to produce current flow in any such mixtures which by virtue of their inherent non-linear circuit characteristics give rise to secondary E.M. field effects which are non-linear with respect to the at least one created E.M. field, investigating any secondary E.M. field created by the excitation of the body by said at least one created E.M. field for the presence of any such non-linear secondary E.M. field effects to determine if any such mixtures are present.

2.      An inductive electromagnetic investigative method as claimed in Claim 1, wherein any secondary electromagnetic field is investigated by receiver means essentially minimum coupled with said at least one created electromagnetic field.

3.      An inductive electromagnetic investigative method as claimed in Claim 1 wherein the frequency of the at least one electromagnetic field is in the range of 1 hertz to 10 K hertz.

4.      An inductive electromagnetic investigative method as claimed in Claim 1 wherein the frequency of the at least one electromagnetic field is in the range of 1 hertz to 2.5 K hertz.

5.      An inductive electromagnetic investigative method as claimed in Claims 1, 2, or 3, wherein the at least one electromagnetic field is created by transmitting an essentially pure sine wave and wherein any secondary electrmagnetic field is investigated at harmonics of said pure sine wave.

6. An inductive electromagnetic field is investigative method as claimed in Claim 4, wherein said secondary electromagnetic field is investigated at the third harmonic of said pure sine wave.

7. An inductive electromagnetic investigative method as claimed in Claims 1, 2 or 3, wherein two electromagnetic fields are created having different frequencies and investigating said secondary field at the beat frequencies.

8. A method as defined in Claim 4 including subjecting the body to be investigated to a further different stimulating E.M. field which amplify the non linear effects due to the mixtures.

9. An inductive E.M. investigative method as defined in Claim 4 including further subjecting the body to be investigated to an intermittent D.C. E.M. field to enhance the harmonic response in the secondary E.M. field.

10. An inductive E.M. investigative method as defined in Claim 1 including creating two E.M. fields one of which has a frequency of 50 hertz to 5 K hertz and the second field has a substantially lower frequency in the range of .1 to 40 hertz.

11. An inductive E.M. investigative method as defined in Claim 1 for use in determining the presence of weld faults and other discontinuities in rods and pipelines.

12. An inductive E.M. investigative method as defined in Claim 1 including further analysing the phase characteristics of any uncovered non linear secondary field effects to indicate the nature of the mixtures.

13. A system for an inductive electromagnetic investigative method for determining the presence of constituents mixtures of metallic compositions in a body comprising means for creating at least one electromagnetic field which is inductively coupled to the body to be investigated for exciting the body to produce current flow in any such mixtures which by virtue of their inherent non linear circuit characteristics, give rise to secondary electromagnetic field effects which are non linear with respect to the at least one created electromagnetic field and receiver means for investigating any secondary electromagnetic field created by the excitation of the body by the said at least one created electromagnetic field for investigating the presence of any such non linear secondary electromagnetic field effects to determine if any such mixtures are present.

14. A system as defined in Claim 13, wherein such transmitting means comprises a signal generator and a transmitting loop.

15. A system as defined in Claim 14, wherein said receiving means selected from the group of receiving means consisting of receiver coils, fluxgate, magnaometer and cryogenic devices.

16. A system as defined in Claim 15, wherein the transmitting loop is stationery and the receiving means is portable.

17. A system as defined in Claim 16, wherein the transmitting loop and receiving means are both portable and are carried with one another in a fixed, constant relationship.

FIG.1.

1

3

5

7

9

11

12

13

- 1/3 -

0017682

FIG.2.

FIG.3.

FIG.5.    FIG.4.